# EUROPEAN PATENT SPECIFICATION

(11) **EP 2 674 333 B1**
(45) Date of publication and mention of the grant of the patent: **24.12.2014**
(21) Application number: 12171453.9
(22) Date of filing: 11.06.2012
(51) Int. Cl.: B60R 21/02

(54) **Foldable compartment divider for a vehicle**
Klappbarer Fachteiler für ein Fahrzeug
Diviseur de compartiment pliable pour véhicule

(43) Date of publication of application: 18.12.2013
(73) Proprietor: Volvo Car Corporation, 40 531 Göteborg (SE)
(72) Inventor: von Eichwald, Tor, 422 43 Hisings Backa (SE); Rignell, Jonas, 41455 Göteborg (SE); English, Nick, Shrewsbury, SY3 8RS (GB); Warwick, Brian, Wrexham, LL13 0QL (GB)
(74) Representative: Kraenzmer, Martin

(56) References cited:
- EP-A1- 2 008 877
- DE-C1- 10 054 079
- US-B1- 6 595 567
- US-B2- 6 457 600

## Description

### TECHNICAL FIELD

The present invention relates to a foldable compartment divider for a vehicle, also usually called cargo net, safety net or load net, which are used to divide the load compartment from the passenger compartment in order to avoid luggage to enter into the passenger compartment from the load compartment when braking or at an accident. In particular, the invention relates to a hinge or pivotal connection of a bar to which the net is attached in order to allow the bar to be folded.

### BACKGROUND

Vehicles, e.g. cars, are often provided with removable compartment dividers. In order to be able to store the compartment divider in an efficient way may these compartment dividers be collapsible. The dividers are often attached to an upper and lower bar which normally stretch along the width of the car. In order to store these dividers when not in use and located in the vehicle may the bars be provided with a pivotal connection dividing the bars in two essentially equal parts such that the beam may be folded 180 degrees, i.e. half a complete turn, at the pivotal connection such that the length will be reduced to half the deployed length. Such an arrangement is for example described in US 6,595,567 or US 6,457,600. The bar may be subject to strong forces in the case of accident when luggage or parcels in the load compartment moves rapidly into the compartment divider. In these cases may there be strong bending forces acting on the hinge (pivotal connection) which is a weak point since the hinge in a general case is located at the middle of the bar, which is the most critical point concerning bending forces and possible rupture of the bar.

### SUMMARY

The present invention provides a bar, comprising a pivotal connection, for a compartment divider which improves safety for the occupants of the vehicle in case of an accident. The accidental risk is reduced compared to previous solutions having a pivotal connection of a similar kind as described herein in that there is a reduced risk for loose parts originating from the pivotal connection to be released in an uncontrolled manner.

Hence, the invention relates to a cover plate for a hinge or a pivotal connection for a bar intended to form part of a removable compartment divider and a removable compartment divider comprising such a hinge. The compartment divider may be used for separating a load compartment from a passenger compartment in a vehicle in order to prevent luggage or other loads to enter into the passenger compartment in case of an accident or braking of the vehicle. The compartment divider comprises a net and a first, foldable bar attached to the net along a first side of the net. The bar may be attached to the upper side or the lower side of the net or two such bars as described herein may be used, one at the upper side and another one at the lower side. In general, both the upper side and lower side of the net comprises one or several bars used for attaching the compartment divider to the vehicle, the upper bar attached in or close to the roof and the lower bar usually attached at the height of the backrest upper end of the backseat and attached either to the backrest or to the sides of the vehicle such that the bars extends essentially along the width of the vehicle. Hence, the net extends in its working position between the upper and lower bars and between the sides of the vehicle in a plane perpendicular to the longitudinal direction of the vehicle. The bar according to the invention comprises a first section and a second section connected by a hinge such that the bar may be folded when stowed away. Hence, the first, foldable bar is able to switch between a deployed, functional mode (I) in which the first and second sections have been turned essentially 180 degrees, i.e. half a full turn, compared to when it is in its second folded, storage mode (II). In the first functional mode, i.e. when the compartment divider is used an mounted in the vehicle in order to divide two compartments, are the first and second section of the bar positioned one after the other in the longitudinal direction so as to provide a bar having a length essentially corresponding to the sum of the lengths of the first and second bar sections. In general, the sections are of equal length in order to be able to reduce the length as much as possible when the compartment divider is folded to its second, storage mode (II). In this mode are the first and second sections turned back around the hinge essentially 180 degrees, i.e. half a full turn, such that the first and second sections are positioned parallel to each other. When the compartment divider is in its second, storage mode (II) will the sides of the first and second sections forming the bar facing each other hereinafter be referred to as the lower sides and the sides of the sections facing away from each other will be referred to as the upper sides. In this mode will the bar have a length corresponding essentially to the length of the longest section of the two sections. Since the first and second sections are generally of the same length will the bar, and thus the compartment divider, have a length in its folded, storage mode (II) of about half the length of the bar when it is in its deployed, functional mode. The hinge arrangement comprises a first rounded end part of the first section and a second rounded end part of the second section. The first and second rounded parts are facing each other and connected to each other by a link plate attached to the first and second section. In many cases are two link plates used, one on each, opposite side of the bar. On single link plate could of course also be used, in this case preferably centrally located in order to avoid skewing of the bar. The link plate is preferably connected to the respective first and second sections of the bar such that the rounded end parts are in close contact with each other and support each other when the hinge is turned. The rounded parts may be toothed such that the teeth mesh with each other when the hinge is turned. Each of the first and second rounded end parts is provided with an edge on its circumference, e.g. a threshold like protrusion. The edges are designed and located on the rounded parts such that they will appear on the upper side of the bar when the bar is in its deployed state such that a step like edge on each of the rounded parts are facing towards each other. Hence, these edges may thus in this position engage with an intermediate cover plate located between the first and second sections. The cover plate may thus serve two purpose, a first purpose is to provide a protection for something entering into the hinge arrangement and prevent accidents such as squeezing a finger or an undesired object entering into the arrangement and ruining the function of the hinge. A second purpose of the cover plate may be to define a stopping position when the bar is in its deployed mode (I) and function such that further turning beyond 180 degrees of the hinge is prevented. Hence, the cover plate will cover the space between the rounded end parts on the upper side of the bar. In order to keep the cover plate in the desired position is it attached to an anchoring device via a connecting link and the anchoring device is attached to the bar in order to keep it steady.

Even though the above described device work satisfactorily in many ways could it be further improved concerning security if the hinge arrangement and cover plate is somewhat modified. In case of overbending of the hinge, i.e. when the hinge is bent more than half a turn (180 degrees), may the cover plate break in an uncontrolled manner. This may be the case if the compartment divider is subject to a load, e.g. in the case of an accident, and there is an increased force working on the bar. In this case may there thus be a force from the edges on the rounded end parts of the bar sections pressing on the cover plate such that the cover plate may break or detach from the anchoring device. In this case may loose particles from the cover plate tumble around inside the vehicle.

In order to prevent the release of loose particles originating from the cover plate may the cover plate be connected to the bar by an extendable safety attachment. If the cover plate moves relative the anchoring device such that it is detached from the connecting link, e.g. by being pressed out of its position due to overbending, will the cover plate still be connected to the bar by the extendable safety attachment. In this way, the presence of dangerous, freely moving particles originating from the cover plate in the case of an accident is reduced.

According to one embodiment of the invention are the cover plate, anchoring device, connecting link and extendable safety attachment made as one integral unit. This integrally formed unit may be made by moulding of plastics.

In order to improve the behaviour of the cover plate in the case of an increased pressure on it may it be provided with weakened portions in order to facilitate bending of the cover plate when subjected to compressive forces parallel to the longitudinal direction of the bar. These weakened portions may be in the form of indentations in the cover plate running parallel to the side edges intended to engage with the edges on the rounded parts of the bar sections, i.e. in a direction perpendicular to the longitudinal direction of the bar when the cover plate is attached to the compartment divider bar. By shaping these weakened portions correctly, and using a suitable material, may a desired, controlled bending of the cover plate occur when there is an increased pressure on the cover plate from the edges on the rounded parts of the bar sections such that.

The extendable safety attachment may be designed to have a zig-zag shaped design before it is extended. Other shapes and designs of the extendable safety attachment is of course also possible but this zig-zag shaped configuration works well and is suitable when it is moulded as an integral piece together with the cover plate, anchoring device and connecting link

The anchoring device may be attached to the link plate when it is attached to the bar of the removable compartment divider. The anchoring device may for example be in the shape of a pin and may be fitted in holes of link plates forming part of the hinge arrangement on each side of the rounded parts of the bar sections.

According to one embodiment is the connecting link provided with a weakened portion such that the connecting link will break before the cover plate will break when the cover plate is subjected to forces striving to tear the cover plate and anchoring device apart. At this occasion will the cover plate rather be bent or deformed than break by being designed correctly.

The invention thus also relates to a cover plate for a hinge for a foldable bar to be used in a removable compartment divider for a vehicle. The cover plate is provided with an anchoring device intended to be attached to the removable compartment divider and form a cover surface for a part of the hinge. The cover plate is attached to the anchoring device via a connecting link. The cover plate according to the invention further comprises the features of being connected to the anchoring device by an extendable safety attachment allowing said cover plate to move and detach at the connecting link while still being connected to the bar by the extendable safety attachment.

### BRIEF DESCRIPTION OF THE DRAWINGS

The objects and advantages of the present invention will be further clarified in the following description and appended claims and also shown on the accompanying drawings in which:
Fig. 1 discloses a compartment divider comprising a foldable bar
Fig. 2 discloses a hinge located in the foldable bar
Fig. 3 discloses a cover plate
Fig. 4a, 4b discloses a cover plate in its attached state (4a) and detached state (4b)

### DETAILED DESCRIPTION

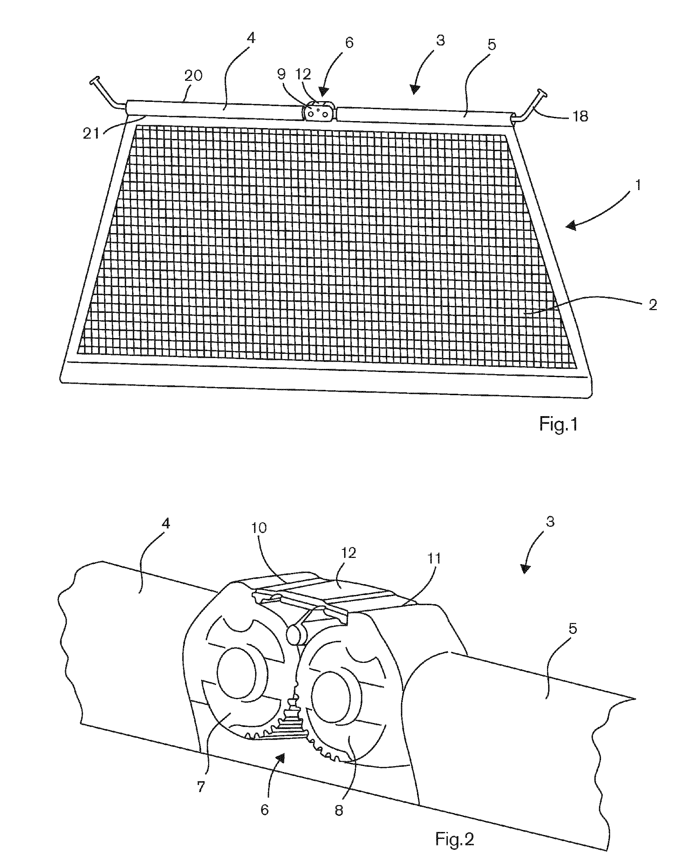

In figure 1 is disclosed a compartment divider 1 according to the invention when it is in its deployed, functional mode (I). The compartment divider comprises a net 2, having a trapezoidal shape in order to closely fit into the shape of a vehicle, and an upper bar 3 which is divided in a first section 4 and second section 5 by an intermediate hinge 6. The hinge 6 is provided with a cover plate 12 which is located on the upper side 20 of the bar 3 and a link plate 9 to which the sections 4,5 are attached forming the hinge 6. The bar 3 further comprises attachment portions 18 at its ends in order to attach the compartment divider 1 to the roof of a vehicle. When the bar 3 is folded, the first and second sections 4,5 are bent downwards and turned around the hinge 6 such that the respective upper sides 20 of the sections 4,5 will face away from each other and the lower sides 21 will face against each other.

In this figure, no particular construction is shown at the lower side of the net 2. The lower side could include a bar 3 as shown at the upper side of the net 2 or separate bars, e.g. a bar at each side extending somewhat less than half the length of the lower side of the net.

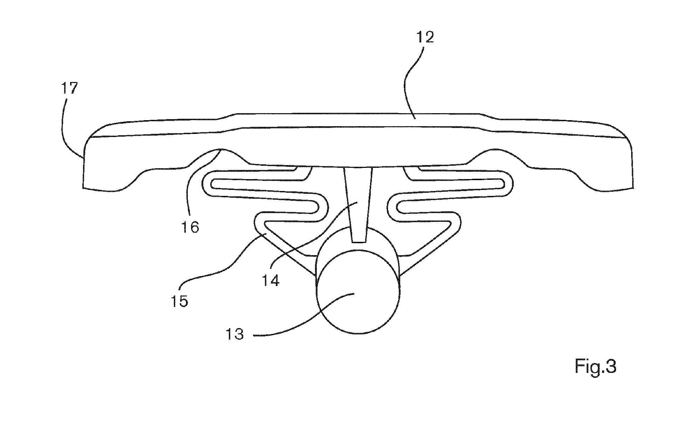

In figure 2 is a more detailed view of the hinge 6 shown in which the link plate 9 has been removed in order to reveal the details beyond the link plate. In this view may it thus be seen that the respective sections 4, 5 are provided with rounded end parts 7, 8 which forms part of the hinge arrangement 6. The bar 3 is shown in its deployed, functional mode (I) in which the bar sections have been turned 180 degrees from being aligned parallel and beside each other in its second, storage mode (II). In this view may it also be seen that the edges 10, 11 of the respective rounded parts 7,8 of each of the sections 4,5 are engaged with the transversal edges 17 (see figure 3) of the cover plate 12. When the bar sections 4,5 are turned downward will the toothed parts of the rounded end parts 7,8 mesh with each other during turning and when the sections have turned back 180 degrees, i.e. half a complete round, will the bar 3 be in its second, storage mode (II) having the sections aligned parallel to each other beside each other. From this figure it may also be realized if the bar sections are turned more than 180 degrees from its second, storage mode (II) will the bar 3 be overbent and the edges 10, 11 of the respective rounded parts 7,8 of each of the sections 4,5 will thus provide a compressive force on the transversal edges 17 of the cover plate 12 which may break or deform the cover plate 12 or detach it from its attachment to the bar 3.

In figure 3 is the cover plate 12 shown together with its features which are used to attached the cover plate 12 to the bar 3. The detail shown in figure 3 may be produced as one integral entity. The cover plate 12 is connected to an anchoring device 13, which in this case is in the form of a pin, via a connecting link 14 such that the cover plate 12 is kept rigidly in its desired place. The cover plate 12 is further connected to the anchoring device 13 by the extendable safety attachment 15 which forms a loose, resilient attachment between the cover plate 12 and the anchoring device 13 such that the cover plate 12 and the anchoring device 13 may move relative each other while still being connected to each other. The pin shaped anchoring device 13 is attached to the bar 3 by fitting the pin shaped part in holes in the link plate 9 (see fig 1). In this view may also be seen weakenings or weakened portions 16 in the form of indentations in the cover plate 12 which run parallel to the transversal edges 17. These indentations will facilitate bending of the cover plate 12 without breaking when subjected to compressive forces on the edges 17.

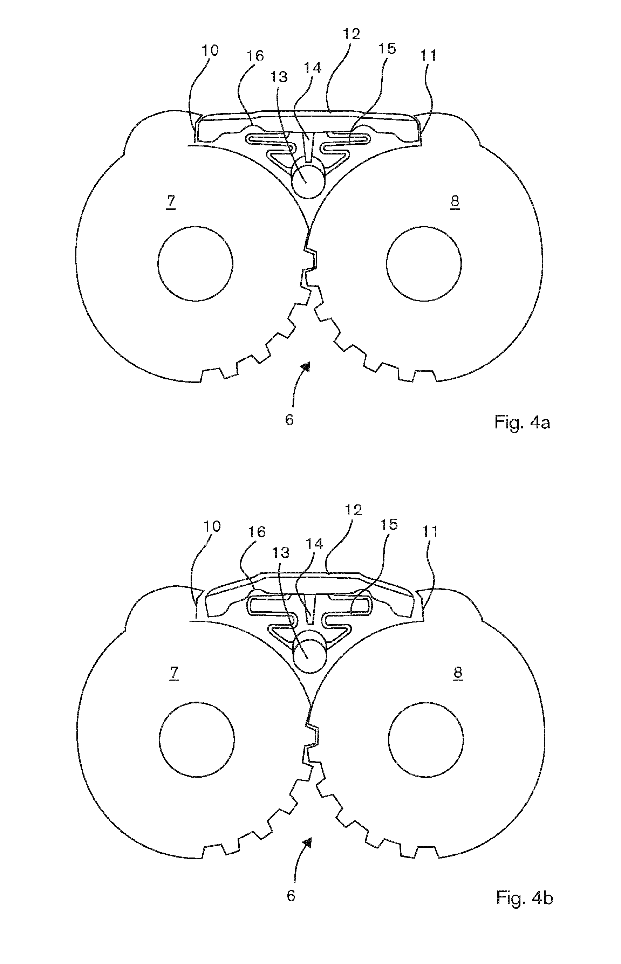

In figure 4a and 4b is the cover plate 12 shown when it is in its normal state (fig. 4a) and after it has been subjected to forces which has ruptured the connecting link 14, e.g. from compressive forces from the edges 10, 11 of the rounded end parts 7,8 due to overbending of the bar 3 (see fig. 2).

Hence, in figure 4a is the cover plate 12 and its connecting link 14 still intact and the cover plate 12 may be kept steady at its desired location by this attachment to the anchoring device 13 in order to function as a protector, e.g. prevent accidents such as squeezing a finger or preventing an undesired object entering into the arrangement and ruining the function of the hinge, and to define a stopping position when the bar is in its deployed mode (I) and function such that further turning beyond 180 degrees of the hinge is prevented.

In figure 4b has the cover plate 12 been detached from its connection to the anchoring device 13 via the connecting link 14. However, the cover plate 12 is still attached to the anchoring device 13 via the extendable safety attachment 15 which has been extended without breaking. As also may be seen in this figure, the cover plate 12 has bent at the weakened portions 16 which are designed to promote bending and avoid rupture of the cover plate. Hence, the cover plate 12 has detached from its attachment by the connecting link 14 providing for a rigid connection to the anchoring device 13 without losing its connection to the anchoring device 13 thanks to the resilient and extendable safety connection 15 such that the presence of loose parts originating from the cover plate 12 is prevented.

## Claims

1. A removable compartment divider (1) for separating a load compartment from a passenger compartment in a vehicle comprising a net (2) and a first, foldable bar (3) attached to the net (2) along a first side of the net, said bar (3) comprising a first section (4) and a second section (5) connected by a hinge (6), said first, foldable bar (3) being able to switch between a deployed, functional mode (I) in which the first and second sections (4,5) have been turned essentially 180 degrees, i.e. half a full turn, and are positioned one after the other in the longitudinal direction so as to provide a bar (3) having a length essentially corresponding to the sum of the lengths of the first and second sections (4,5), and a folded, transport mode (II) in which the first and second sections (4,5) are turned back around the hinge (6) essentially 180 degrees, i.e. half a full turn, such that the first and second sections (4,5) are positioned parallel to each other while the lower sides of the first and second sections (4,5) forming the bar (3) face each other and the upper sides face away from each other and the bar (3) will have a length corresponding essentially to the length of the longest section (4 or 5), said hinge (6) comprising a first rounded end part (7) of the first section (3) and a second rounded end part (8) of the second section (4), said first and second rounded parts (7, 8) facing each other and connected to each other by a link plate (9) attached to the first and second section (4, 5), said first and second rounded end parts (7,8) provided with a first respectively second edge (10, 11) on its circumferences, said edges (10, 11) being designed and located on the rounded parts (7,8) such that they will appear on the upper side of the bar (3) and engage with a cover plate (12) located between the first and second sections (4,5) when the bar (3) is in its deployed mode (I) and function such that further turning beyond 180 degrees of the pivotal joint (5) is prevented, said cover plate (12) covering the space between the rounded end parts (7,8) on the upper side of the bar (3), said cover plate (12) further attached to an anchoring device (13) via a connecting link (14), said anchoring device (13) attached to the bar (3)
**characterized in that**
said cover plate (12) is further connected to the bar (3) by an extendable safety attachment (15) allowing said cover plate (5) to move and detach from the connecting link (14) while still being connected to the bar (3) by the extendable safety attachment (15).

2. A removable compartment divider (1) according to claim 1 **characterized in that** said cover plate (12), anchoring device (13), connecting link (14) and extendable safety attachment (15) are made as one integral unit.

3. A removable compartment divider (1) according to claim 2 **characterized in that** said cover plate (12), anchoring device (13), connecting link (14) and extendable safety attachment (15) are moulded in plastics as one integral unit it is made of moulded plastics.

4. A removable compartment divider (1) according to any previous claim **characterized in that** said cover plate (12) is provided with weakened portions (16) in order to facilitate bending of the cover plate (12) when subjected to compressive forces parallel to the longitudinal direction of the bar (3).

5. A removable compartment divider (1) according to any previous claim **characterized in that** said extendable safety attachment (15) is designed to have a zig-zag shaped design before it is extended.

6. A removable compartment divider (1) according to any previous claim **characterized in that** said anchoring device (13) is attached to the link plate (9).

7. A removable compartment divider (1) according to any previous claim **characterized in that** said connecting link (14) is provided with a weakened portion such that the connecting link (14) will break before the cover plate (12) when the cover plate (12) is subjected to forces striving to tear the cover plate (12) and anchoring device (13) apart.

8. A cover plate (12) for a hinge (6) for a foldable bar (3) in a removable compartment divider (1) for a vehicle according to one of claims 1 to 7 said cover plate (12) provided with an anchoring device (13) attached to the removable compartment divider (1) and said cover plate (12) attached to the anchoring device (13) via a connecting link (14)
**characterized in that**
said cover plate (12) is further connected to the anchoring device (13) by an extendable safety attachment (15) allowing said cover plate (12) to move and detach at the connecting link (14) while still being connected to the anchoring device (13) by the extendable safety attachment(15).

9. A cover plate (12) according to claim 8 **characterized in that** said cover plate (12), anchoring device (13), connecting link (14) and extendable safety attachment (15) are made as one integral unit.

10. A cover plate (12) according to claim 9 **characterized in that** said cover plate (12), anchoring device (13), connecting link (14) and extendable safety attachment (15) are moulded in plastics as one integral unit it is made of moulded plastics.

11. A cover plate (12) according to any of claims 8-10 **characterized in that** said cover plate (12) is provided with weakened portions (16) in order to facilitate bending of the cover plate (12) when subjected to compressive forces parallel to the longitudinal direction of the bar (3).

12. A cover plate (12) according to any of claims 8-11 **characterized in that** said extendable safety attachment (15) is designed to have a zig-zag shaped design before it is extended.

13. A cover plate (12) according to any of claims 8-12 **characterized in that** said connecting link (14) is provided with a weakened portion such that the connecting link (14) will break before the cover plate (12) when the cover plate (12) is subjected to forces striving to tear the cover plate (12) and anchoring device (13) apart.

## Patentansprüche

1. Entfernbarer Abteilteiler (1) zum Abtrennen eines Lastabteils von einem Fahrgastabteil in einem Fahrzeug, der ein Netz (2) und eine erste zusammenklappbare Stange (3), die entlang einer erste Seite des Netzes an dem Netz (2) angebracht ist, umfasst, wobei die Stange (3) einen ersten Abschnitt (4) und einen zweiten Abschnitt (5), die mit einem Scharnier (6) verbunden sind, umfasst, wobei die erste zusammenklappbare Stange (3) zwischen einem ausgeklappten Funktionsmodus (I), in dem der erste und zweite Abschnitt (4, 5) im Wesentlichen um 180 Grad, d.h. um eine halbe Volldrehung, gedreht wurden und einer hinter dem anderen in der Längsrichtung positioniert sind, um eine Stange (3) bereitzustellen, die eine Länge aufweist, die im Wesentlichen der Summe der Längen des ersten und zweiten Abschnitts (4, 5) entspricht, und einem zusammengeklappten Transportmodus (II), in dem der erste und der zweite Abschnitt (4, 5) um im Wesentlichen 180 Grad, d.h. um eine halbe Volldrehung, um das Scharnier (6) herum zurück gedreht sind, so dass der erste und zweite Abschnitt (4, 5) zueinander parallel positioniert sind, wobei die Unterseiten des ersten und zweiten Abschnitts (4, 5), die die Stange (3) bilden, zueinander weisen und die Oberseiten voneinander weg weisen und die Stange (3) eine Länge aufweist, die im Wesentlichen der Länge des längsten Abschnitts (4 oder 5) entspricht, wechseln kann, wobei das Scharnier (6) einen ersten abgerundeten Endteil (7) des ersten Abschnitts (4) und einen zweiten abgerundeten Endteil (8) des zweiten Abschnitts (5) umfasst, wobei der erste und zweite abgerundete Teil (7, 8) zueinander weisen und miteinander durch eine Verbindungsplatte (9), die an dem ersten und zweiten Abschnitt (4, 5) angebracht ist, verbunden sind, wobei der erste und zweite abgerundete Endteil (7, 8) auf ihrem Umfang mit einem ersten bzw. zweiten Rand (10, 11) versehen sind, wobei die Ränder (10, 11) an den abgerundeten Teilen (7, 8) ausgeführt und dort angeordnet sind, so dass sie auf der Oberseite der Stange (3) erscheinen und mit einer zwischen dem ersten und zweiten Abschnitt (4, 5) angeordneten Abdeckplatte (12) in Eingriff stehen, wenn sich die Stange (3) in ihrem ausgeklappten Modus (I) befindet, und derart wirken, dass ein Weiterdrehen des Schwenkgelenks (6) über 180 Grad hinaus verhindert wird, wobei die Abdeckplatte (12) den Raum zwischen den abgerundeten Endteilen (7, 8) auf der Oberseite der Stange (3) abdeckt, wobei die Abdeckplatte (12) ferner über ein Verbindungsglied (14) an einer Verankerungsvorrichtung (13) angebracht ist, wobei die Verankerungsvorrichtung (13) an der Stange (3) befestigt ist,
**dadurch gekennzeichnet, dass**
die Abdeckplatte (12) ferner über eine auseinanderziehbare Sicherheitshalterung (15) mit der Stange (3) verbunden ist, wodurch gestattet wird, dass sich die Abdeckplatte (12) bewegt und vom Verbindungsglied (14) löst, während sie durch die auseinanderziehbare Sicherheitshalterung (15) noch mit der Stange (3) verbunden ist.

2. Entfernbarer Abteilteiler (1) nach Anspruch 1, **dadurch gekennzeichnet, dass** die Abdeckplatte (12), die Verankerungsvorrichtung (13), das Verbindungsglied (14) und die auseinanderziehbare Sicherheitshalterung (15) als integrale Einheit hergestellt sind.

3. Entfernbarer Abteilteiler (1) nach Anspruch 2, **dadurch gekennzeichnet, dass** die Abdeckplatte (12), die Verankerungsvorrichtung (13), das Verbindungsglied (14) und die auseinanderziehbare Sicherheitshalterung (15) als integrale Einheit, die aus geformtem Kunststoffmaterial hergestellt ist, aus Kunststoffmaterial geformt sind.

4. Entfernbarer Abteilteiler (1) nach einem vorhergehenden Anspruch, **dadurch gekennzeichnet, dass** die Abdeckplatte (12) mit geschwächten Abschnitten (16) versehen ist, um ein Biegen der Abdeckplatte (12) zu ermöglichen, wenn diese Druckkräften parallel zur Längsrichtung der Stange (3) ausgesetzt ist.

5. Entfernbarer Abteilteiler (1) nach einem vorhergehenden Anspruch, **dadurch gekennzeichnet, dass** die auseinanderziehbare Sicherheitshalterung (15) dazu ausgeführt ist, vor ihrem Auseinanderziehen eine Zickzackkonfiguration aufzuweisen.

6. Entfernbarer Abteilteiler (1) nach einem vorhergehenden Anspruch, **dadurch gekennzeichnet, dass** die Verankerungsvorrichtung (13) an der Verbindungsplatte (9) angebracht ist.

7. Entfernbarer Abteilteiler (1) nach einem vorhergehenden Anspruch, **dadurch gekennzeichnet, dass** das Verbindungsglied (14) mit einem geschwächten Abschnitt versehen ist, so dass das Verbindungsglied (14) vor der Abdeckplatte (12) bricht, wenn die Abdeckplatte (12) Kräften ausgesetzt wird, die darauf abzielen, die Abdeckplatte (12) und die Verankerungsvorrichtung (13) auseinander zu reißen.

8. Abdeckplatte (12) für ein Scharnier (6) für eine zusammenklappbare Stange (3) in einem entfernbaren Abteilteiler (1) für ein Fahrzeug nach einem der Ansprüche 1 bis 7, wobei die Abdeckplatte (12) mit einer an dem entfernbaren Abteilteiler (1) angebrachten Verankerungsvorrichtung (13) versehen ist und die Abdeckplatte (12) über ein Verbindungsglied (14) an der Verankerungsvorrichtung (13) angebracht ist,
**dadurch gekennzeichnet, dass**
die Abdeckplatte (12) ferner über eine auseinanderziehbare Sicherheitshalterung (15) mit der Verankerungsvorrichtung (13) verbunden ist, wodurch gestattet wird, dass sich die Abdeckplatte (12) bewegt und am Verbindungsglied (14) löst, während sie durch die auseinanderziehbare Sicherheitshalterung (15) noch mit der Verankerungsvorrichtung (13) verbunden ist.

9. Abdeckplatte (12) nach Anspruch 8, **dadurch gekennzeichnet, dass** die Abdeckplatte (12), die Verankerungsvorrichtung (13), das Verbindungsglied (14) und die auseinanderziehbare Sicherheitshalterung (15) als integrale Einheit hergestellt sind.

10. Abdeckplatte (12) nach Anspruch 9, **dadurch gekennzeichnet, dass** die Abdeckplatte (12), die Verankerungsvorrichtung (13), das Verbindungsglied (14) und die auseinanderziehbare Sicherheitshalterung (15) als integrale Einheit, die aus geformtem Kunststoffmaterial hergestellt ist, aus Kunststoffmaterial geformt sind.

11. Abdeckplatte (12) nach einem der Ansprüche 8-10, **dadurch gekennzeichnet, dass** die Abdeckplatte (12) mit geschwächten Abschnitten (16) versehen ist, um ein Biegen der Abdeckplatte (12) zu ermöglichen, wenn diese Druckkräften parallel zur Längsrichtung der Stange (3) ausgesetzt ist.

12. Abdeckplatte (12) nach einem der Ansprüche 8-11, **dadurch gekennzeichnet, dass** die auseinanderziehbare Sicherheitshalterung (15) dazu ausgeführt ist, vor ihrem Auseinanderziehen eine Zickzackkonfiguration aufzuweisen.

13. Abdeckplatte (12) nach einem der Ansprüche 8-12, **dadurch gekennzeichnet, dass** das Verbindungsglied (14) mit einem geschwächten Abschnitt versehen ist, so dass das Verbindungsglied (14) vor der Abdeckplatte (12) bricht, wenn die Abdeckplatte (12) Kräften ausgesetzt wird, die darauf abzielen, die Abdeckplatte (12) und die Verankerungsvorrichtung (13) auseinander zu reißen.

## Revendications

1. Élément de séparation (1) de compartiments amovible servant à séparer un compartiment de charge et un compartiment pour passagers dans un véhicule, comprenant un filet (2) et une première barre pliable (3) fixée au filet (2) le long d'un premier côté du filet, ladite barre (3) comprenant une première section (4) et une seconde section (5) raccordées par le biais d'une charnière (6), ladite première barre pliable (3) pouvant adopter soit un mode fonctionnel déployé (I) dans lequel les première et seconde sections (4, 5) ont été pivotées d'essentiellement 180 degrés, c'est-à-dire la moitié d'un tour entier, et sont positionnées l'une après l'autre dans la direction longitudinale de façon à produire une barre (3) présentant une longueur correspondant essentiellement à la somme des longueurs des première et seconde sections (4, 5), soit un mode de transport plié (II) dans lequel les première et seconde sections (4, 5) sont pivotées dans le sens inverse autour de la charnière (6) d'essentiellement 180 degrés, c'est-à-dire la moitié d'un tour entier, de telle sorte que les première et seconde sections (4, 5) se trouvent parallèles l'une à l'autre tandis que les côtés inférieurs des première et seconde sections (4, 5) formant la barre (3) se trouvent en regard l'un de l'autre et les côtés supérieurs sont orientés de manière opposée l'un vis-à-vis de l'autre et la barre (3) présente alors une longueur correspondant essentiellement à la longueur de la section la plus longue (4 ou 5), ladite charnière (6) comprenant une première partie d'extrémité arrondie (7) de la première section (4) et une seconde partie d'extrémité arrondie (8) de la seconde section (5), lesdites première et seconde partie d'extrémité arrondies (7, 8) se trouvant en regard l'une de l'autre et étant raccordées l'une à l'autre par une plaque de liaison (9) fixée aux première et seconde sections (4, 5), lesdites première et seconde parties d'extrémité arrondies (7, 8) étant dotées respectivement d'un premier et d'un second bord (10, 11) sur leur circonférence, lesdits bords (10, 11) étant conçus et placés sur les parties arrondies (7, 8) de façon à apparaître sur le côté supérieur de la barre (3) et à s'accoupler avec une plaque couvrante (12) placée entre les première et seconde sections (4, 5) lorsque la barre (3) se trouve dans son mode déployé (I) et agissent de telle sorte que l'articulation pivotante (6) ne puisse pivoter davantage au-delà de 180 degrés, ladite plaque couvrante (12) recouvrant l'espace entre les parties d'extrémité arrondies (7, 8) sur le côté supérieur de la barre (3), ladite plaque couvrante (12) étant en outre fixée à un dispositif d'ancrage (13) par le biais d'une pièce de raccordement (14), ledit dispositif d'ancrage (13) étant fixé à la barre (3)
**caractérisé en ce que**
ladite plaque couvrante (12) est en outre raccordée à la barre (3) par le biais d'une pièce de fixation de sécurité extensible (15) permettant à ladite plaque couvrante (12) de bouger et de se détacher de la pièce de raccordement (14) tout en restant raccordée à la barre (3) par le biais de la pièce de fixation de sécurité extensible (15).

2. Élément de séparation (1) de compartiments amovible selon la revendication 1, **caractérisé en ce que** ladite plaque couvrante (12), ledit dispositif d'ancrage (13), ladite pièce de raccordement (14) et ladite pièce de fixation de sécurité extensible (15) sont réalisés sous la forme d'une unité monobloc.

3. Élément de séparation (1) de compartiments amovible selon la revendication 2, **caractérisé en ce que** ladite plaque couvrante (12), ledit dispositif d'ancrage (13), ladite pièce de raccordement (14) et ladite pièce de fixation de sécurité extensible (15) sont réalisés par moulage à partir de matières plastiques sous la forme d'une unité monobloc constituée de matières plastiques moulées.

4. Élément de séparation (1) de compartiments amovible selon l'une quelconque des revendications précédentes, **caractérisé en ce que** ladite plaque couvrante (12) est dotée de parties de faiblesse (16) afin de faciliter la flexion de la plaque couvrante (12) lorsqu'elle est soumise à des forces de compression parallèles à la direction longitudinale de la barre (3).

5. Élément de séparation (1) de compartiments amovible selon l'une quelconque des revendications précédentes, **caractérisé en ce que** ladite pièce de fixation de sécurité extensible (15) est conçue de façon à présenter une configuration en forme de zigzag avant son extension.

6. Élément de séparation (1) de compartiments amovible selon l'une quelconque des revendications précédentes, **caractérisé en ce que** ledit dispositif d'ancrage (13) est fixé à la plaque de liaison (9).

7. Élément de séparation (1) de compartiments amovible selon l'une quelconque des revendications précédentes, **caractérisé en ce que** ladite pièce de raccordement (14) est dotée d'une partie de faiblesse de façon à ce que la pièce de raccordement (14) se rompe avant la plaque couvrante (12) lorsque la plaque couvrante (12) est soumise à des forces visant à séparer la plaque couvrante (12) et le dispositif d'ancrage (13) par arrachement.

8. Plaque couvrante (12) pour une charnière (6) pour une barre pliable (3) dans un élément de séparation (1) de compartiments amovible pour un véhicule selon l'une des revendications 1 à 7, ladite plaque couvrante (12) étant dotée d'un dispositif d'ancrage (13) fixé à l'élément de séparation (1) de compartiments amovible et ladite plaque couvrante (12) étant fixée au dispositif d'ancrage (13) par le biais d'une pièce de raccordement (14)
**caractérisée en ce que**
ladite plaque couvrante (12) est en outre raccordée au dispositif d'ancrage (13) par le biais d'une pièce de fixation de sécurité extensible (15) permettant à ladite plaque couvrante (12) de bouger et de se détacher au niveau de la pièce de raccordement (14) tout en restant raccordée au dispositif d'ancrage (13) par le biais de la pièce de fixation de sécurité extensible (15).

9. Plaque couvrante (12) selon la revendication 8, **caractérisée en ce que** ladite plaque couvrante (12), ledit dispositif d'ancrage (13), ladite pièce de raccordement (14) et ladite pièce de fixation de sécurité extensible (15) sont réalisés sous la forme d'une unité monobloc.

10. Plaque couvrante (12) selon la revendication 9, **caractérisée en ce que** ladite plaque couvrante (12), ledit dispositif d'ancrage (13), ladite pièce de raccordement (14) et ladite pièce de fixation de sécurité extensible (15) sont réalisés par moulage à partir de matières plastiques sous la forme d'une unité monobloc constituée de matières plastiques moulées.

11. Plaque couvrante (12) selon l'une quelconque des revendications 8 à 10, **caractérisée en ce que** ladite plaque couvrante (12) est dotée de parties de faiblesse (16) afin de faciliter la flexion de la plaque couvrante (12) lorsqu'elle est soumise à des forces de compression parallèles à la direction longitudinale de la barre (3).

12. Plaque couvrante (12) selon l'une quelconque des revendications 8 à 11, **caractérisée en ce que** ladite pièce de fixation de sécurité extensible (15) est conçue de façon à présenter une configuration en forme de zigzag avant son extension.

13. Plaque couvrante (12) selon l'une quelconque des revendications 8 à 12, **caractérisée en ce que** ladite pièce de raccordement (14) est dotée d'une partie de faiblesse de façon à ce que la pièce de raccordement (14) se rompe avant la plaque couvrante (12) lorsque la plaque couvrante (12) est soumise à des forces visant à séparer la plaque couvrante (12) et le dispositif d'ancrage (13) par arrachement.
